# EUROPÄISCHE PATENTSCHRIFT

(11) **EP 2 028 063 B1**
(45) Veröffentlichungstag und Bekanntmachung des Hinweises auf die Patenterteilung: **02.03.2011**
(21) Anmeldenummer: 07464004.6
(22) Anmeldetag: 24.08.2007
(51) Int. Cl.: B60R 21/01

(54) **Verfahren zum Erzeugen eines Ansteuersignals und Mikrocontroller für ein Steuergerät**
Method for creating an actuation signal and microcontroller for a control device
Procédé de production d'un signal de commande et microcontrôleur pour un appareil de commande

(43) Veröffentlichungstag der Anmeldung: 25.02.2009
(73) Patentinhaber: Continental Automotive GmbH, 30165 Hannover (DE)
(72) Erfinder: De Wille, Eberhard, 92287 Schmidmühlen (DE); Vede, Daniela, 300743 Timisoara (RO)

(56) Entgegenhaltungen:
- DE-A1-102004 036 291
- DE-A1-102005 006 401
- DE-B3-102004 018 824

## Beschreibung

Die Erfindung betrifft ein Verfahren zum Erzeugen eines Ansteuersignals für einen Aktor, insbesondere ein Personenschutzsystem in einem Fahrzeug. Die Erfindung betrifft ferner einen Mikrocontroller für ein Steuergerät, insbesondere eines Personenschutzsystems in einem Fahrzeug.

Sicherheitskritische Systeme, wie z.B. ein Personenschutzsystem in einem Fahrzeug, benötigen eine Absicherung gegenüber Fehlentscheidungen. Dies wird beispielsweise durch die redundante Auslegung sicherheitskritischer Komponenten des Sicherheitssystems bewerkstelligt. So werden beispielsweise bei einem Personenschutzsystem zur Ansteuerung von Airbags die von einem oder mehreren Sensoren gelieferten Sensorsignale zwei parallel vorgesehenen Mikrocontrollern oder -prozessoren zugeführt, welche vorzugsweise mit unterschiedlichen Algorithmen eine Auslöseentscheidung ermitteln. Einer der beiden Mikrocontroller wird als Haupt-Mikrocontroller bezeichnet und bildet einen ersten Entscheidungspfad. Der andere Mikrocontroller wird als Hilfs- oder Sicherheits-Mikrocontroller bezeichnet und liegt in einem zweiten Entscheidungspfad. Der in dem zweiten Entscheidungspfad vorgesehene Mikrocontroller ist in der Regel mit einem vereinfachten Auswertealgorithmus versehen, da der primäre Zweck lediglich die Absicherung der Auswerteentscheidung des im ersten Entscheidungspfad liegenden Mikroprozessors ist. Die von den beiden Mikrocontrollern ermittelten Auslöse- oder Nicht-Auslöseentscheidungen werden einer von den Mikrocontrollern separaten Verarbeitungseinheit zur Verknüpfung zugeführt. Nur wenn beide Mikrocontroller zum gleichen Ergebnis gelangen, wird auf eine Auslöseentscheidung entschieden und ein entsprechendes Ansteuersignal an einen oder mehrere Personenschutzmittel abgegeben. Das Bereitstellen eines zweiten, parallelen Mikrocontrollers ist jedoch mit hohen Kosten verbunden.

Ein anderes bekanntes Sicherheitskonzept, das ebenfalls mehrere Entscheidungspfade nutzt, beruht auf der Berücksichtigung der Sensorsignale zweier unterschiedlicher Sensoren. In einem ersten Hauptentscheidungspfad werden die von einem Hauptsensor bereitgestellten Sensorsignale gemäß einer ersten Auswertevorschrift verarbeitet. Die Sensorsignale eines zweiten Sensors werden gemäß einer zweiten Auswertevorschrift auf demselben Mikrocontroller ausgewertet, wobei die zweite Auswertevorschrift wiederum zur Absicherung der in dem Hauptentscheidungspfad getroffenen Entscheidung dient. Hierbei wird eine Verknüpfung der von den beiden Auswertevorschriften im Haupt- und Hilfsentscheidungspfad ermittelten Ergebnisse vorgenommen und eine Auslöseentscheidung getroffen, wenn in beiden Auswertevorschriften das gleiche Ergebnis ermittelt wurde. Da die Verknüpfung der Auswerteentscheidungen auch in diesem Mikrocontroller erfolgt, ist keine ausreichende Sicherheit gegenüber Fehlentscheidungen gegeben. Aus diesem Grund ist ein zweiter Mikrocontroller (Absicherungs-Mikrocontroller) vorgesehen, welchem die von dem ersten Hauptsensor bereitgestellten Signale zur Auswertung gemäß einem dritten Auswertealgorithmus zugeführt werden. Schließlich werden in einer weiteren Verarbeitungseinheit, die separat von dem ersten und dem zweiten Mikrocontroller ist, die jeweiligen Auslöseentscheidungen miteinander verknüpft um zu einer endgültigen Entscheidung zu gelangen. Auch dieses Sicherheitskonzept erfordert damit zwei separate Mikrocontroller, um eine Fehlertoleranz gegenüber einem ausfallenden Mikrocontroller zu erhalten.

Aus der DE 10 2005 410 A1 ist eine Schaltungsanordnung und ein Verfahren zum Steuern einer Sicherheitseinrichtung mit redundanten Sensoren bekannt, deren Signale in zwei Schaltmitteln (z.B. Mikroprozessoren oder ASICS) ausgewertet werden.

Es wäre jedoch wünschenswert, die Anzahl der Mikrocontroller in einem Signal- und Entscheidungspfad eines Sicherheitssystems reduzieren zu können.

Es ist daher Aufgabe der vorliegenden Erfindung, ein Verfahren zum Erzeugen eines Ansteuersignals für einen Aktor anzugeben, welches mit lediglich einem einzigen Mikrocontroller auskommt und dennoch eine hohe Zuverlässigkeit gegenüber Fehlentscheidungen aufweist. Es ist weiterhin Aufgabe der vorliegenden Erfindung, einen Mikrocontroller für ein Steuergerät anzugeben, welcher einen hohen Schutz gegenüber Fehlentscheidungen aufweist. Es ist ferner Aufgabe der vorliegenden Erfindung, ein Steuergerät, insbesondere für ein Personenschutzsystem in einem Fahrzeug, anzugeben, welches eine hohe Zuverlässigkeit gegenüber Fehlentscheidungen aufweist.

Diese Aufgaben werden durch die Merkmale der unabhängigen Patentansprüche gelöst. Vorteilhafte Ausführungsformen finden sich jeweils in den abhängigen Patentansprüchen.

Ein erfindungsgemäßes Verfahren zum Erzeugen eines Ansteuersignals für einen Aktor, insbesondere ein Personenschutzsystem in einem Fahrzeug, umfasst die folgenden Schritte: In einem ersten Entscheidungspfad wird ein von einem ersten Sensor bereitgestelltes erstes Sensorsignal in einem Mikrocontroller gemäß einer ersten Auswertevorschrift ausgewertet und ein der Auswertung entsprechendes Auslösesignal ausgegeben. In einem zweiten Entscheidungspfad wird ein von einem zweiten Sensor bereitgestelltes zweites Sensorsignal in dem Mikrocontroller gemäß einer zweiten Auswertevorschrift ausgewertet und ein der Auswertung entsprechendes Bestätigungssignal ausgegeben. Es wird weiter ein Anregungssignal von dem Mikrocontroller gemäß einer dritten Auswertevorschrift ausgewertet und ein der Auswertung entsprechendes Diagnosesignal ausgegeben. Das Auslösesignal, das Bestätigungssignal und das Diagnosesignal werden einer außerhalb des Mikrocontrollers angeordneten Signalverknüpfungseinheit zugeführt, die das Ansteuersignal an den Aktor abgibt, wenn
- das erste Sensorsignal einem oder mehreren vorbestimmten ersten Kriterien entspricht,
- das zweite Sensorsignal einem oder mehreren vorbestimmten zweiten Kriterien entspricht, und
- das ausgewertete Anregungssignal einem erwarteten Ergebnis entspricht. Der Erfindung liegt die Erkenntnis zu Grunde, dass eine Absicherung für das Ansteuersignal gegenüber Fehlern des Mikrocontrollers durch die Auswertung eines Diagnosesignals parallel zur Durchführung von Auswerteentscheidungen in voneinander unabhängigen Entscheidungspfaden durchgeführt werden kann. Hierdurch kann auf den im Stand der Technik üblichen zusätzlichen Absicherungs-Mikrocontroller verzichtet werden. Ferner weist das Verfahren den Vorteil auf, dass die Abhängigkeit der Diagnose des Mikrocontrollers unabhängig von einem Sensorsignal ist.

Das Vorgehen zur Ermittlung des Ansteuersignals, das im Falle eines Personenschutzsystems ein Ansteuersignal für ein Rückhaltemittel sein kann, basiert hierbei auf bereits bekannten Prinzipien. Eine erste Entscheidung wird in einem ersten Entscheidungspfad getroffen. Diese wird durch einen zweiten Entscheidungspfad auf ihre Plausibilität hin überprüft. Zusätzlich wird ein Diagnosesignal erzeugt, das eine Aussage über die bestimmungsgemäße Funktion des Mikrocontrollers enthält. Hierbei erfolgt die Verknüpfung des im ersten Entscheidungspfad ermittelten Auslösesignals, des im zweiten Entscheidungspfad ermittelten Bestätigungssignals und des Diagnosesignals nicht innerhalb des Mikrocontrollers, sondern in einer außerhalb des Mikrocontrollers angeordneten Signalverknüpfungseinheit. Hierdurch wird die Sicherheit zur Erzeugung eines korrekten Ansteuersignals weiter erhöht.

Die Ermittlung, ob das erste Sensorsignal einem oder mehreren vorbestimmten ersten Kriterien, ob das zweite Sensorsignal einem oder mehreren vorbestimmten zweiten Kriterien und das ausgewertete Diagnosesignal einem erwarteten Ergebnis entspricht, wird hierbei durch den Mikrocontroller bzw. die jeweiligen Auswertevorschriften vorgenommen. In der Verknüpfungseinheit wird lediglich eine Verknüpfung der Ergebnisse, welche in dem Auslösesignal, dem Bestätigungssignal und dem Diagnosesignal enthalten sind, vorgenommen.

Gemäß einer Ausbildung umfasst die dritte Auswertevorschrift einen ersten Algorithmus, der als Vital Code vorliegt. Bei diesem können beispielsweise Variablen mit zumindest einem ersten Schlüssel modifiziert sein. Das Vital Coding ist eine Technologie, bei der "normaler" Code derart verändert ist, dass die Verarbeitung eigensicher ist. Dies bedeutet, beim Ablauf eines Vital Codes wird die Hardware und deren bestimmungsgemäßes Vorgehen implizit diagnostiziert. Die dritte Auswertevorschrift kann den ersten Algorithmus auch in unmodifizierter Form umfassen.

Es ist zweckmäßig, wenn die dritte Auswertevorschrift und die erste Auswertevorschrift zyklisch parallel zueinander auf dem Mikrocontroller ablaufen.

Die dritte Auswertevorschrift kann weiter einen zweiten Algorithmus umfassen, der Hardware-Komponenten des Mikrocontrollers auf ihre bestimmungsgemäße Funktionalität testet. Dies kann beispielsweise durch Checksummenbildung oder Speicherzellenüberprüfung erfolgen. Bei den durch den zweiten Algorithmus getesteten Hardware-Komponenten kann es sich um einen flüchtigen Speicher und/oder einen nicht-flüchtigen Speicher und/oder einen Analog-Digital-Wandler und/oder einen Datenbus handeln. Grundsätzlich lassen sich mit dem zweiten Algorithmus all diejenigen Hardware-Komponenten überprüfen, bei denen die Diagnose nicht innerhalb eines Ablaufszyklus zur Ermittlung des Auslösesignals bzw. des Bestätigungssignals bzw. des Diagnosesignals durchführbar ist. Die Abarbeitung des zweiten Algorithmus benötigt deshalb zweckmäßigerweise mehrere Zyklen der ersten Auswertevorschrift.

In einer weiteren Ausgestaltung wird ein jeweiliges von dem modifizierten ersten Algorithmus, dem unmodifizierten ersten Algorithmus und dem zweiten Algorithmus erzeugtes Ausgangssignal einer Verknüpfungslogik des Mikrocontrollers zugeführt, welche die jeweiligen Ausgangssignale zu dem Diagnosesignal verarbeitet. Mit anderen Worten bedeutet dies, dass zur Ermittlung des Diagnosesignals eine Mehrzahl an unterschiedlichen, parallel ablaufenden Entscheidungspfaden herangezogen werden können, die innerhalb einer Verknüpfungslogik des Mikrocontrollers auf Übereinstimmung bewertet werden. Nur wenn sämtliche, der parallel ablaufenden Entscheidungspfade zu einem übereinstimmenden Ergebnis kommen wird ein Diagnosesignal ausgegeben, welches dem erwarteten Ergebnis entspricht.

Um die Sicherheit der Verknüpfung der Ausgangssignale des modifizierten ersten Algorithmus, des unmodifizierten ersten Algorithmus und des zweiten Algorithmus zu erhöhen, basiert die Verknüpfungslogik zweckmäßigerweise auf einem dritten Algorithmus, welcher ebenfalls als Vital Code vorliegt. Hierbei können beispielsweise wiederum Variablen mit zumindest einem zweiten Schlüssel modifiziert sein.

Als Anregungssignal kann ein beliebiges, künstlich erzeugtes Signal verwendet werden. Dieses kann z.B. durch einen Signalgenerator des Mikrocontrollers erzeugt werden. Alternativ kann das Anregungssignal auch durch einen Signalgenerator außerhalb des Mikrocontrollers erzeugt werden. Als Anregungssignal eignet sich beispielsweise ein Rechtecksignal.

In einer weiteren zweckmäßigen Ausgestaltung werden das Auslösesignal, das Bestätigungssignal und das Diagnosesignal der Signalverknüpfungseinheit über voneinander getrennte und unabhängige Datenpfade zugeführt. Hierdurch kann die Sicherheit zur Erzeugung des Ansteuersignals weiter erhöht werden.

Ein erfindungsgemäßer Mikrocontroller für ein Steuergerät, insbesondere eines Personenschutzsystems in einem Fahrzeug, umfasst eine erste Verarbeitungseinheit zum Verarbeiten eines von einem ersten Sensor bereitgestellten ersten Sensorsignals gemäß einer ersten Auswertevorschrift und zur Ausgabe eines der Auswertung entsprechenden Auslösesignals an einem ersten Ausgang des Mikrocontrollers. Der Mikrocontroller umfasst weiter eine zweite Verarbeitungseinheit zum Verarbeiten eines von einem zweiten Sensor bereitgestellten zweiten Sensorsignals gemäß einer zweiten Auswertevorschrift und zur Ausgabe eines der Auswertung entsprechenden Bestätigungssignals an einem zweiten Ausgang des Mikrocontrollers. Es ist ferner eine dritte Verarbeitungseinheit zum Verarbeiten eines von dem ersten und dem zweiten Sensorsignal verschiedenen Anregungssignals gemäß einer dritten Auswertevorschrift und zur Ausgabe eines der Auswertung entsprechenden Diagnosesignals an einem dritten Ausgang des Mikrocontrollers vorgesehen.

Hierdurch werden die gleichen Vorteile erreicht, wie sie vorstehend im Zusammenhang mit dem erfindungsgemäßen Verfahren beschrieben wurden.

Eine Verarbeitungseinheit ist dabei insbesondere ein Programm oder ein Programmteil, das auf dem Prozessor des Mikrocontrollers ablaufen kann. Es sind aber auch Realisierungen mit jeweils eigenen Prozessorkernen möglich.

In einer Ausgestaltung weist der Mikrocontroller einen Signalgenerator zur Erzeugung des Anregungssignals auf.

In einer weiteren Ausbildung umfasst die dritte Verarbeitungseinheit einen ersten Algorithmus, welcher als Vital Code vorliegt. Die dritte Auswertevorschrift kann in einer weiteren Ausführungsform den ersten Algorithmus auch in einer unmodifizierten Form umfassen. Der erste Algorithmus stellt einen Sicherheitsalgorithmus für die Ermittlung eines Auslösekriteriums für einen Aktor dar.

In einer weiteren Ausbildung ist vorgesehen, dass die dritte Vorschrift einen zweiten Algorithmus umfasst, der Hardware-Komponenten des Mikrocontrollers, insbesondere einen flüchtigen Speicher und/oder einen nicht-flüchtigen Speicher und/oder einen Analog-Digital-Wandler und/oder einen Datenbus, auf ihre bestimmungsgemäße Funktionalität testet.

Der Mikrocontroller weist in einer weiteren Ausbildung eine Verknüpfungslogik auf, welche ein jeweiliges von dem modifizierten ersten Algorithmus, dem unmodifizierten ersten Algorithmus und dem zweiten Algorithmus erzeugtes Ausgangssignal zuführbar ist und welche dazu ausgebildet ist, die jeweiligen Ausgangssignale zu dem Diagnosesignal zu verarbeiten.

Von der Erfindung ist ferner ein Steuergerät, insbesondere für ein Personenschutzsystem in einem Fahrzeug, umfasst. Dieses umfasst einen Mikrocontroller der oben beschriebenen Art. Das Steuergerät umfasst ferner eine von dem Mikrocontroller getrennte Signalverknüpfungseinheit, welcher von dem Mikrocontroller das Auslösesignal, das Bestätigungssignal und das Diagnosesignal zuführbar ist, wobei die Signalverknüpfungseinheit dazu ausgebildet ist, ein Ansteuersignal an den Aktor abzugeben, wenn das erste Sensorsignal einem oder mehreren vorbestimmten ersten Kriterien entspricht, das zweite Sensorsignal einem oder mehreren vorbestimmten zweiten Kriterien entspricht und das ausgewertete Anregungssignal einem erwarteten Ergebnis entspricht.

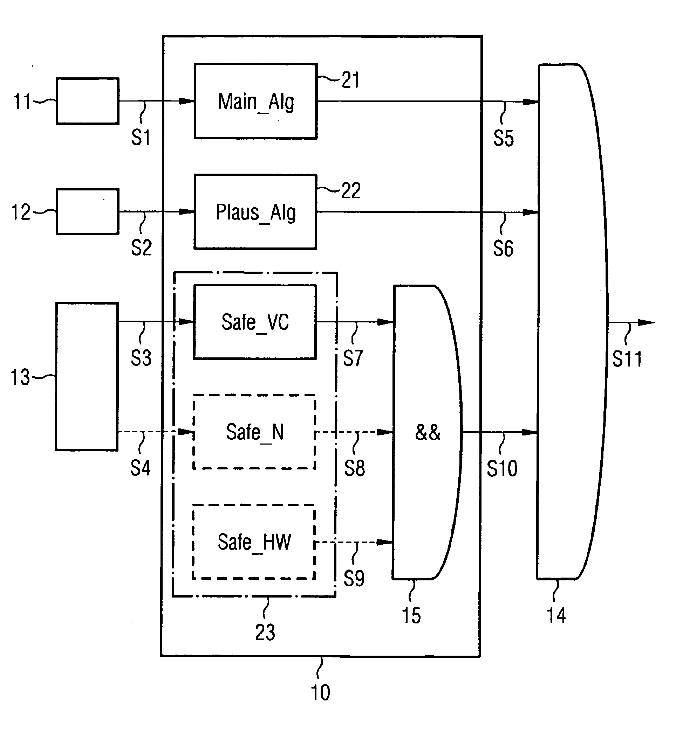

Die Erfindung wird nachfolgend anhand eines Ausführungsbeispiels unter Bezugnahme auf die Zeichnung näher erläutert. Die einzige Figur zeigt eine schematische Darstellung eines Sicherheits- und Plausibilitätskonzepts zur Erzeugung eines Ansteuersignals. Dieses kann beispielsweise Verwendung in einem Steuergerät für ein Personenschutzsystem finden, z.B. zur Auslösung von Rückhaltemitteln, wie z.B. Airbags und/oder Gurtstraffern.

Zur Absicherung der Funktionalität eines Mikrocontrollers 10 und eines auf Plausibilität überprüften Ansteuersignals S11 wird lediglich ein Mikroprozessor benötigt. Der Mikroprozessor 10 umfasst eine erste Verarbeitungseinheit 21 mit einer ersten Auswertevorschrift Main_Alg. Der ersten Verarbeitungseinheit 21 wird ein erstes Sensorsignal S1 eines ersten Sensors 11 zugeführt. Die erste Verarbeitungseinheit 21 verarbeitet das erste Sensorsignal S1 gemäß der ersten Auswertevorschrift Main_Alg und gibt an eine außerhalb des Mikrocontrollers 10 angeordnete Signalverknüpfungseinheit 14 ein Auslösesignal S5 ab.

Um die Plausibilität des Auslösesignals S5 zu verifizieren, umfasst der Mikrocontroller 10 eine zweite Verarbeitungseinheit 22, auf welcher eine zweite Auswertevorschrift Plaus_Alg abläuft. Der zweiten Verarbeitungseinheit 22 wird von einem zweiten Sensor 12 ein zweites Sensorsignal S2 zugeführt, welches gemäß der zweiten Auswertevorschrift verarbeitet wird und zu einem Bestätigungssignal S6 führt. Das Bestätigungssignal S6 wird ebenfalls der Signalverknüpfungseinheit 14 zugeführt.

Das Auslösesignal S5 sowie das Bestätigungssignal S6 umfassen jeweils Signalwerte, welche einer Auslöseentscheidung oder einer Nicht-Auslöseentscheidung entsprechen. Durch die Verknüpfung des Auslösesignals S5 und des Bestätigungssignals S6 könnte bereits das Ansteuersignal S11 erzeugt werden. Ein Ansteuersignal S11 zur Ansteuerung bzw. Auslösung eines Aktors, insbesondere des Personenschutzsystems in einem Fahrzeug, würde nur dann erzeugt werden, wenn sowohl das Auslösesignal S5 als auch das Plausibilitätssignal S6 einer Auslöseentscheidung, d.h. dem Vorliegen eines Crashs, entspricht.

Die erste und die zweite Auswertevorschrift Main-Alg, Plaus_Alg sind bevorzugt unterschiedlich ausgebildet. Die im ersten Entscheidungspfad, dem sog. Hauptentscheidungspfad, vorgesehene erste Auswertevorschrift, die das erste Sensorsignal S1 von einem Hauptsensor, dem ersten Sensor 11, erhält, ermittelt die Auslöseentscheidung mit einer höheren Genauigkeit und/oder unter Berücksichtigung einer Vielzahl von Randbedingungen. Demgegenüber ist die im zweiten Entscheidungspfad, dem sog. Plausibilitätspfad, enthaltene Auswertevorschrift einfacher ausgelegt, da diese lediglich zur Verifizierung der im Hauptentscheidungspfad ermittelten Auslöseentscheidung dient.

Welcher Art der erste und der zweite Sensor 11, 12 sind, hängt von dem Zweck des erfindungsgemäßen Steuergeräts ab. Dient das Steuergerät beispielsweise zur Ansteuerung von Rückhaltemitteln, welche Schutz gegen einen Aufprall von vorne (Frontcrash) geben sollen, so wird als erster Sensor 11 beispielsweise ein in Fahrzeuglängsachsenrichtung (x-Richtung) sensierender Beschleunigungssensor verwendet. Als zweiter Sensor 12 wird dann z.B. ein in Fahrzeugquerachsenrichtung (y-Richtung) sensierender Beschleunigungssensor verwendet.

Dient das Steuergerät zum Ansteuern von Rückhaltemitteln, die aus einem Seitenaufprall her stammen, so wird als erster Sensor 11 ein Beschleunigungssensor verwendet, der die Beschleunigung in y-Richtung sensiert. Der im zweiten Entscheidungspfad liegende zweite Sensor 12 stellt dann z.B. einen Beschleunigungssensor dar, der eine Beschleunigung in x-Richtung sensiert.

Soll durch das Steuergerät ein Fahrzeugüberschlag (sog. Roll Over) erkannt werden, so ist der erste Sensor 11 ein Drehratensensor, der eine Drehung um die Fahrzeuglängsachse sensiert. Der zweite Sensor 12 stellt in diesem Fall einen Beschleunigungssensor dar, der eine Beschleunigung in Fahrzeughochachsenrichtung (z-Richtung) sensiert.

Neben den genannten Sensorpaaren können auch weitere Kombinationen für den ersten und den zweiten Sensor 11, 12 verwendet werden.

Zur Absicherung der Funktionalität des den Haupt- und Plausibilitätspfad umfassenden Mikrocontrollers 10 wird im Stand der Technik ein weiterer Mikrocontroller verwendet, der als Eingangssignal z.B. das Signal des im Hauptentscheidungspfad liegenden Sensors erhält. Im Gegensatz dazu sieht die Erfindung eine dritte Verarbeitungseinheit 23 in dem Mikrocontroller 10 vor, welche ein künstliches Anregungssignal S3, S4, das von dem Mikrocontroller 10 selbst oder von einem Signalgenerator 13 außerhalb des Mikrocontrollers 10 erzeugt wird, gemäß einer dritten Auswertevorschrift verarbeitet. Die dritte Verarbeitungsvorschrift umfasst im Ausführungsbeispiel einen ersten Algorithmus Safe_VC, welcher als Vital Code vorliegt, optional den ersten Algorithmus Safe_N in unmodifizierter Form und ebenfalls optional einen zweiten Algorithmus Safe_HW, der Hardware-Komponenten des Mikrocontrollers 10 auf ihre bestimmungsgemäße Funktionalität testet.

Das künstliche Signal S3, S4 wird ausschließlich zu Diagnosezwecken verwendet. S3 und S4 können unterschiedliche oder identische Signale sein. S4 wird dem unmodifizierten ersten Algorithmus Safe_N, und S3 wird dem vital coded ersten Algorithmus Safe_VC zugeführt. Bei dem ersten Algorithmus handelt es sich um einen Sicherheitsalgorithmus für die Ermittlung eines Auslösekriteriums für den Aktor, welcher dem im Stand der Technik verwendeten Safety-Algorithmus des zweiten Mikrocontrollers entspricht.

Das Ergebnis der Algorithmen Safe_N und Safe_VC wird einer in dem Mikrocontroller 10 vorgesehenen Verknüpfungslogik 15 zugeführt. Hierbei findet ein Vergleich der durch die beiden Algorithmen Safe_VC und Safe_N ermittelten Signalwerte S7, S8 statt. Die Signalwerte S7, S8 werden durch die Verknüpfungslogik 15 zyklisch verglichen, wobei dieser Zyklus den Zyklen der Algorithmen Main_Alg und Plaus_Alg entspricht. Auf diese Weise ist der erste, modifizierte Algorithmus Safe_VC in der Lage, einen Fehler des Mikrocontrollers 10 bei der Ausführung eines jeden Zyklus aufzudecken. Ergebnis der Verknüpfung ist ein Diagnosesignal S10, welches der externen Signalverknüpfungseinheit 14 von der Verknüpfungslogik 15 zugeführt wird. Das Diagnosesignal S10 wird hierbei zusammen mit dem Auslösesignal S5 und dem Bestätigungssignal S6 verarbeitet, woraus im Ergebnis das Ansteuersignal S11 ermittelt wird. Das Auslösesignal S11 entspricht nur dann einem Auslösesignal des Personenschutzsystems, wenn sowohl das Auslösesignal S5 als auch das Bestätigungssignal S6 einer Auslöseentscheidung entsprechen und das Diagnosesignal S10 einem bestimmungsgemäßen Funktionieren des Mikrocontrollers 10 entspricht.

In der dritten Verarbeitungseinheit 23 kann ferner ein zweiter Algorithmus Safe_HW durchgeführt werden, der der langsam arbeitenden Diagnose Hardware-Komponenten, wie z.B. einem flüchtigen Speicher (RAM) und/oder einem nicht-flüchtigen Speicher (ROM) und/oder einem Analog-Digital-Wandler und/oder einem Datenbus, dient. Die Abarbeitung des zweiten Algorithmus benötigt mehrere Zyklen der ersten bzw. der zweiten Auswertevorschrift. Der zweite Algorithmus der dritten Verarbeitungseinheit 23 kann beispielsweise eine Checksummenbildung und Speicherzellenüberprüfungen vornehmen. Das Ergebnis der Überprüfung wird in einem Signalwert S9 der Verknüpfungslogik 15 zugeführt und zusammen mit den Signalwerten S7, S8 zu dem gemeinsamen Diagnosesignal 10 verarbeitet.

Die in der dritten Auswertevorschrift ablaufenden Algorithmen Safe_N und Safe_HW sind redundant zum Algorithmus Safe_VC. Es ist prinzipiell auch ausreichend, wenn lediglich der Algorithmus Safe_VC abläuft. In diesem Fall ist die Verknüpfungslogik 15 entbehrlich.

Sofern die Verknüpfungslogik 15 in dem Mikrocontroller 10 vorgesehen ist, ist es vorgesehen, dass diese auf einem dritten Algorithmus basiert, welcher ebenfalls als Vital Code vorliegt. Hierdurch wird eine maximale Sicherheit bei der Ermittlung des Diagnosesignals S10 sichergestellt.

Wie aus der vorangegangenen Beschreibung ersichtlich wurde, ist jedes der aus dem Mikrocontroller 10 herausgeführten Signale S5, S6, S10 in der Lage, eine Auslösung des Aktors zu verhindern. Zweckmäßigerweise werden die Signale S5, S6 und S10 der Signalverknüpfungseinheit 14 über voneinander getrennte und unabhängige Datenpfade zugeführt. Bei der Signalverknüpfungseinheit 14 handelt es sich um eine externe, d.h. extern gegenüber dem Mikrocontroller 10, ausgebildete Hardware-Komponente.

Die Verwendung von Algorithmen, die als Vital Code ausgebildet sind, weist den Vorteil auf, dass eine eigensichere Verarbeitung erzielt ist. Hierdurch wird in zuverlässiger Weise eine Diagnose der Hardware durchgeführt. Die Ausgestaltung von Algorithmen als Vital Code ist aus dem Stand der Technik bekannt und wird daher nicht näher erläutert.

In einer alternativen Ausgestaltung könnte statt der Verwendung eines künstlichen Anregungssignals für die dritte Verarbeitungsvorschrift auch das Sensorsignal des ersten und/oder zweiten Sensors 11, 12 verwendet werden. Dies hat zur Folge, dass für jedes Sensorsignal und damit für die Evaluierung einer jeweiligen Crashsituation eine separate Auswertevorschrift vorgesehen werden müsste. Die Anzahl der sog. Safing-Pfade würde damit der Anzahl der durch den Mikrocontroller abzudeckenden Crashsituationen entsprechen. Im Gegensatz dazu erlaubt es das beschriebene, vorgeschlagene Verfahren mit einem einzigen Safing-Pfad auszukommen.

Die Vorteile des erfindungsgemäßen Vorgehens lassen sich wie folgt zusammenfassen:
1. Für die Diagnose des Mikrocontrollers sowie für den Haupt- und den Plausibilitätspfad existieren separate Ausgänge. Die Diagnose ersetzt den früher vorhandenen Sicherheitsmechanismus, welcher auf einem separaten, zweiten Mikrocontroller abläuft. Die Diagnose ist unabhängig von der Ausgestaltung des Systems bzw. des Mikrocontrollers. Dies bedeutet, es ist keine Änderung notwendig, unabhängig davon, ob der Mikrocontroller nicht nur für Frontaufprall, sondern beispielsweise auch für einen Roll Over zuständig ist. Die Diagnose kann damit auf allgemeine Weise bereitgestellt werden und stellt einen standardisierten Teil des Systems dar. Für alle, in dem Mikrocontroller enthaltenen Algorithmen wird lediglich ein einziger Diagnoseausgang benötigt.
2. Neben den Standarddiagnosen, wie z.B. die Überprüfung eines ROM oder RAM, existiert eine zusätzliche Diagnostik von vitalen CPU-Funktionalitäten, welche bei jedem Ausführungszyklus der Ausführungsvorschriften in dem Haupt- und Plausibilitätsentscheidungspfad benötigt werden. Daher ist das vorgeschlagene System in der Lage, den Hauptentscheidungspfad abzusichern. Die Diagnose ist in "Vital Coding" programmiert und stellt eine Verbesserung gegenwärtiger Diagnosen dar.
3. Die Plausibilitäts-Funktionalitäten haben einen eigenen Ausgang und werden nicht mehr innerhalb des Mikrocontrollers mit dem Hauptentscheidungspfad kombiniert. Die erhöht den diagnostischen Wert der Plausibilitätsfunktion. Um die Sicherheit des Mikrocontrollers zu erhöhen werden deshalb separate Pfade vorgesehen.

## Patentansprüche

1. Verfahren zum Erzeugen eines Ansteuersignals (S11) für einen Aktor, insbesondere ein Personenschutzsystem in einem Fahrzeug, bei dem
- in einem ersten Entscheidungspfad ein von einem ersten Sensor (11) bereitgestelltes erstes Sensorsignal (S1) in einem Mikrocontroller (10) gemäß einer ersten Auswertevorschrift (Main_Alg) ausgewertet wird und ein der Auswertung entsprechendes Auslösesignal (S5) ausgegeben wird,
- in einem zweiten Entscheidungspfad ein von einem zweiten Sensor (11) bereitgestelltes zweites Sensorsignal (S2) in dem Mikrocontroller (10) gemäß einer zweiten Auswertevorschrift (Plaus_Alg) ausgewertet wird und ein der Auswertung entsprechendes Bestätigungssignal (S6) ausgegeben wird,
- ein Anregungssignal (S3, S4) von dem Mikrocontroller (10) gemäß einer dritten Auswertevorschrift (Safe_VC, Safe_N, Safe_HW) ausgewertet wird und ein der Auswertung entsprechendes Diagnosesignal (S10) ausgegeben wird, und
- das Auslösesignal (S5), das Bestätigungssignal (S6) und das Diagnosesignal (S10) einer außerhalb des Mikrocontrollers (10) angeordneten Signalverknüpfungseinheit (14) zugeführt werden, die das Ansteuersignal (S11) an den Aktor abgibt, wenn
- das erste Sensorsignal (S1) einem oder mehreren vorbestimmten ersten Kriterien entspricht,
- das zweite Sensorsignal (S2) einem oder mehreren vorbestimmten zweiten Kriterien entspricht, und
- das ausgewertete Anregungssignal (S3, S4) einem erwarteten Ergebnis entspricht.

2. Verfahren nach Anspruch 1, bei dem die dritte Auswertevorschrift (Safe_VC, Safe_N, Safe_HW) einen ersten Algorithmus (Safe_VC) umfasst, der als Vital Code vorliegt.

3. Verfahren nach Anspruch 1 oder 2, bei dem die dritte Auswertevorschrift (Safe_VC, Safe_N, Safe_HW) den ersten Algorithmus (Safe_N) in unmodifizierter Form umfasst.

4. Verfahren nach Anspruch 2 oder 3, bei dem der erste Algorithmus (Safe_VC, Safe_N) ein Sicherheitsalgorithmus für die Ermittlung eines Auslösekriteriums für den Aktor ist.

5. Verfahren nach einem der Ansprüche 2 bis 4, bei dem die dritte Auswertevorschrift (Safe_VC, Safe_N, Safe_HW) und die erste Auswertevorschrift (Main_Alg) zyklisch und parallel zueinander auf dem Mikrocontroller (10) ablaufen.

6. Verfahren nach einem der vorherigen Ansprüche, bei dem die dritte Auswertevorschrift (Safe_VC, Safe_N, Safe_HW) einen zweiten Algorithmus (Safe_HW) umfasst, der Hardware-Komponenten des Mikrocontrollers (10) auf ihre bestimmungsgemäße Funktionalität testet.

7. Verfahren nach Anspruch 6, bei dem die durch den zweiten Algorithmus getesteten Hardware-Komponenten ein flüchtiger Speicher und/oder ein nicht-flüchtiger Speicher und/oder ein Analog-Digital-Wandler und/oder ein Datenbus sind.

8. Verfahren nach Anspruch 6 oder 7, bei dem die Abarbeitung des zweiten Algorithmus (Safe_HW) mehrere Zyklen der ersten Auswertevorschrift benötigt.

9. Verfahren nach einem der Ansprüche 2 bis 8, bei dem ein jeweiliges von dem modifizierten ersten Algorithmus, dem unmodifizierten ersten Algorithmus und dem zweiten Algorithmus erzeugtes Ausgangssignal (S7, S8, S9) einer Verknüpfungslogik (15) des Mikrocontrollers (10) zugeführt wird, welche die jeweiligen Ausgangssignale (S7, S8, S9) zu dem Diagnosesignal (S10) verarbeitet.

10. Verfahren nach Anspruch 9, bei dem die Verknüpfungslogik (15) auf einem dritten Algorithmus basiert, welcher als Vital Code vorliegt.

11. Verfahren nach einem der vorherigen Ansprüche, bei dem als Anregungssignal (S3, S4) ein künstlich erzeugtes Signal verwendet wird.

12. Verfahren nach einem der vorherigen Ansprüche, bei dem das Anregungssignal (S3, S4) durch einen Signalgenerator (13) des Mikrocontrollers (10) erzeugt wird.

13. Verfahren nach einem der Ansprüche 1 bis 11, bei dem das Anregungssignal (S3, S4) durch einen Signalgenerator (13) außerhalb des Mikrocontrollers (10) erzeugt wird.

14. Verfahren nach einem der vorherigen Ansprüche, bei dem das Auslösesignal (S5), das Bestätigungssignal (S6) und das Diagnosesignal (S10) der Signalverknüpfungseinheit über voneinander getrennte und unabhängige Datenpfade zugeführt werden.

15. Mikrocontroller für ein Steuergerät, insbesondere eines Personenschutzsystems in einem Fahrzeug, umfassend:
- eine erste Verarbeitungseinheit (21) zum Verarbeiten eines von einem ersten Sensor (11) bereitgestellten ersten Sensorsignals (S1) gemäß einer ersten Auswertevorschrift (Main_Alg) und zur Ausgabe eines der Auswertung entsprechenden Auslösesignals (S5) an einem ersten Ausgang des Mikrocontrollers (10),
- eine zweite Verarbeitungseinheit (22) zum Verarbeiten eines von einem zweiten Sensor (11) bereitgestellten zweiten Sensorsignals (S2) gemäß einer zweiten Auswertevorschrift (Plaus_Alg) und zur Ausgabe eines der Auswertung entsprechenden Bestätigungssignals (S6) an einem zweiten Ausgang des Mikrocontrollers (10),
- eine dritte Verarbeitungseinheit (23) zum Verarbeiten eines von dem ersten und dem zweiten Sensorsignal (S1, S2) verschiedenen Anregungssignals (S3, S4) gemäß einer dritten Auswertevorschrift (Safe_VC, Safe_N, Safe_HW) und zur Ausgabe eines der Auswertung entsprechenden Diagnosesignals (S10) an einem dritten Ausgang des Mikrocontrollers (10).

16. Mikrocontroller nach Anspruch 15, der einen Signalgenerator zur Erzeugung des Anregungssignals (S3, S4) aufweist.

17. Mikrocontroller nach Anspruch 15 oder 16, bei dem die dritte Verarbeitungseinheit (23) einen ersten Algorithmus (Safe_VC) umfasst, welcher als Vital Code ausgebildet ist.

18. Mikrocontroller nach einem der Ansprüche 15 bis 17, bei dem die dritte Auswertevorschrift (Safe_VC, Safe_N, Safe_HW) den ersten Algorithmus (Safe_N) in unmodifizierter Form umfasst .

19. Mikrocontroller nach Anspruch 17 oder 18, bei dem der erste Algorithmus (Safe_VC, Safe_N) ein Sicherheitsalgorithmus für die Ermittlung eines Auslösekriteriums für einen Aktor ist.

20. Mikrocontroller nach einem der Ansprüche 15 bis 19, bei dem die dritte Auswertevorschrift (Safe_VC, Safe_N, Safe_HW) einen zweiten Algorithmus (Safe_HW) umfasst, der Hardware-Komponenten des Mikrocontrollers (10), insbesondere einen flüchtigen Speicher und/oder einen nicht-flüchtiger Speicher und/oder einen Analog-Digital-Wandler und/oder einen Datenbus, auf ihre bestimmungsgemäße Funktionalität testet.

21. Mikrocontroller nach einem der Ansprüche 17 bis 20, bei dem dieser eine Verknüpfungslogik (15) aufweist, welcher ein jeweiliges von dem modifizierten ersten Algorithmus, dem unmodifizierten ersten Algorithmus und dem zweiten Algorithmus erzeugtes Ausgangssignal (S7, S8, S9) zuführbar ist, und welche dazu ausgebildet ist, die jeweiligen Ausgangssignale (S7, S8, S9) zu dem Diagnosesignal (S10) zu verarbeiten.

22. Mikrocontroller nach Anspruch 21, bei dem die Verknüpfungslogik (15) auf einem dritten Algorithmus basiert, welcher als Vital Code ausgebildet ist.

23. Steuergerät, insbesondere für ein Personenschutzsystem in einem Fahrzeug, umfassend:
- einen Mikrocontroller (10) nach einem der Ansprüche 15 bis 22,
- eine von dem Mikrocontroller (10) getrennte Signalverknüpfungseinheit (14), welcher von dem Mikrocontroller (10) das Auslösesignal (S5), das Bestätigungssignal (S6) und das Diagnosesignal (S10) zuführbar ist, wobei die Signalverknüpfungseinheit (14) dazu ausgebildet ist, ein Ansteuersignal (S11) an den Aktor abzugeben, wenn
- das erste Sensorsignal (S1) einem oder mehreren vorbestimmten ersten Kriterien entspricht,
- das zweite Sensorsignal (S2) einem oder mehreren vorbestimmten zweiten Kriterien entspricht, und
- das ausgewertete Anregungssignal (S3, S4) einem erwarteten Ergebnis entspricht.

## Claims

1. Method for generating a drive signal (S11) for an actuator, in particular a personal protection system in a vehicle, wherein
- in a first decision path a first sensor signal (S1) provided by a first sensor (11) is evaluated in a microcontroller (10) in accordance with a first evaluation rule (Main_Alg) and a trigger signal (S5) corresponding to the evaluation is output,
- in a second decision path a second sensor signal (S2) provided by a second sensor (11) is evaluated in the microcontroller (10) in accordance with a second evaluation rule (Plaus_Alg) and a confirmation signal (S6) corresponding to the evaluation is output,
- an excitation signal (S3, S4) is evaluated by the microcontroller (10) in accordance with a third evaluation rule (Safe_VC, Safe_N, Safe_HW) and a diagnostic signal (S10) corresponding to the evaluation is output, and
- the trigger signal (S5), the confirmation signal (S6) and the diagnostic signal (S10) are passed to a signal gating unit (14) which is disposed externally to the microcontroller (10) and which emits the drive signal (S11) to the actuator, if
- the first sensor signal (S1) corresponds to one or more predetermined first criteria,
- the second sensor signal (S2) corresponds to one or more predetermined second criteria, and
- the evaluated excitation signal (S3, S4) corresponds to an expected result.

2. Method according to claim 1, wherein the third evaluation rule (Safe_VC, Safe_N, Safe_HW) includes a first algorithm (Safe_VC) which is present as Vital Code.

3. Method according to claim 1 or 2, wherein the third evaluation rule (Safe_VC, Safe_N, Safe_HW) includes the first algorithm (Safe_VC) in unmodified form.

4. Method according to claim 2 or 3, wherein the first algorithm (Safe_VC, Safe_N) is a safety algorithm for the determination of a trigger criterion for the actuator.

5. Method according to one of claims 2 to 4, wherein the third evaluation rule (Safe_VC, Safe_N, Safe_HW) and the first evaluation rule (Main_Alg) run cyclically and in parallel to one another on the microcontroller (10).

6. Method according to one of the preceding claims, wherein the third evaluation rule (Safe_VC, Safe_N, Safe_HW) includes a second algorithm (Safe_HW), which tests hardware components of the microcontroller (10) to ensure that their functionality is in line with their intended use.

7. Method according to claim 6, wherein the hardware components tested by the second algorithm are a volatile memory and/or a non-volatile memory and/or an analogue/digital converter and/or a data bus.

8. Method according to claim 6 or 7, wherein the execution of the second algorithm (Safe_HW) requires several cycles of the first evaluation rule.

9. Method according to one of claims 2 to 8, wherein a respective output signal (S7, S8, S9) generated by the modified first algorithm, the unmodified first algorithm and the second algorithm is passed to a gating logic (15) of the microcontroller (10), said gating logic (15) processing the respective output signals (S7, S8, S9) to form the diagnostic signal (S10).

10. Method according to claim 9, wherein the gating logic (15) is based on a third algorithm which is present as Vital Code.

11. Method according to one of the preceding claims, wherein an artificially generated signal is used as an excitation signal (S3, S4).

12. Method according to one of the preceding claims, wherein the excitation signal (S3, S4) is generated by a signal generator (13) of the microcontroller (10).

13. Method according to one of claims 1 to 11, wherein the excitation signal (S3, S4) is generated by a signal generator (13) external to the microcontroller (10).

14. Method according to one of the preceding claims, wherein the trigger signal (S5), the confirmation signal (S6) and the diagnostic signal (S10) of the signal gating unit are passed via data paths which are separate from and independent of one another.

15. Microcontroller for a control device, in particular a personal protection system in a vehicle, comprising:
- a first processing unit (21) for processing a first sensor signal (S1) provided by a first sensor (11) in accordance with a first evaluation rule (Main_Alg) and for outputting a trigger signal (S5) corresponding to the evaluation at a first output of the microcontroller (10),
- a second processing unit (22) for processing a second sensor signal (S2) provided by a second sensor (11) in accordance with a second evaluation rule (Plaus_Alg) and for outputting a confirmation signal (S6) corresponding to the evaluation at a second output of the microcontroller (10),
- a third processing unit (23) for processing an excitation signal (S3, S4) different from the first and the second sensor signals (S1, S2) in accordance with a third evaluation rule (Safe_VC, Safe_N, Safe_HW) and for outputting a diagnostic signal (S10) corresponding to the evaluation at a third output of the microcontroller (10).

16. Microcontroller according to claim 15, which has a signal generator for generating the excitation signal (S3, S4).

17. Microcontroller according to claim 15 or 16, wherein the third processing unit (23) includes a first algorithm (Safe_VC) which is embodied as Vital Code.

18. Microcontroller according to one of claims 15 to 17, wherein the third evaluation rule (Safe_VC, Safe_N, Safe_HW) includes the first algorithm (Safe_N) in unmodified form.

19. Microcontroller according to claim 17 or 18, wherein the first algorithm (Safe_VC, Safe_N) is a safety algorithm for the determination of a trigger criterion for an actuator.

20. Microcontroller according to one of claims 15 to 19, wherein the third evaluation rule (Safe_VC, Safe_N, Safe_HW) includes a second algorithm (Safe_HW) which tests hardware components of the microcontroller (10), in particular a volatile memory and/or a non-volatile memory and/or an analogue/digital converter and/or a data bus to ensure that their functionality is in line with their intended use.

21. Microcontroller according to one of claims 17 to 20, wherein said microcontroller has a gating logic (15) to which a respective output signal (S7, S8, S9) generated by the modified first algorithm, the unmodified first algorithm and the second algorithm can be passed, and which is embodied to process the respective output signals (S7, S8, S9) to form the diagnostic signal (S10).

22. Microcontroller according to claim 21, wherein the gating logic (15) is based on a third algorithm which is embodied as Vital Code.

23. Control device, in particular for a personal protection system in a vehicle, comprising:
- a microcontroller (10) according to one of claims 15 to 22,
- a signal gating unit (14) separate from the microcontroller (10) to which the trigger signal (S5), the confirmation signal (S6) and the diagnostic signal (S10) can be passed by the microcontroller (10), wherein the signal gating unit (14) is embodied to emit a drive signal (S11) to the actuator if
- the first sensor signal (S1) corresponds to one or more predetermined first criteria,
- the second sensor signal (S2) corresponds to one or more predetermined second criteria, and
- the evaluated excitation signal (S3, S4) corresponds to an expected result.

## Revendications

1. Procédé pour générer un signal de commande (S11) pour un actionneur, en particulier un système de protection de personnes dans un véhicule automobile, dans lequel :
- dans un premier chemin de décision, un premier signal de capteur (S1) fourni par un premier capteur (11) est exploité dans un microcontrôleur (10) selon une première instruction d'exploitation (Main_Alg) et un signal de déclenchement (S5) correspondant à l'exploitation est délivré,
- dans un deuxième chemin de décision, un deuxième signal de capteur (S2) fourni par un deuxième capteur (11) est exploité dans le microcontrôleur (10) selon une deuxième instruction d'exploitation (Plaus_Alg) et un signal de confirmation (S6) correspondant à l'exploitation est délivré,
- un signal d'excitation (S3, S4) est exploité par le microcontrôleur (10) selon une troisième instruction d'exploitation (Safe_VC, Safe_N, Safe_HW) et un signal de diagnostic (S10) correspondant à l'exploitation est délivré, et le signal de déclenchement (S5), le signal de confirmation (S6) et le signal de diagnostic (S10) sont acheminés à une unité de combinaison de signaux (14) agencée à l'extérieur du microcontrôleur (10), qui transmet le signal de commande (S11) à l'actionneur, lorsque
- le premier signal de capteur (S1) correspond à un ou plusieurs premiers critères prédéterminés,
- le deuxième signal de capteur (S2) correspond à un ou plusieurs seconds critères prédéterminés, et
- le signal d'excitation exploité (S3, S4) correspond à un résultat escompté.

2. Procédé selon la revendication 1, dans lequel la troisième instruction d'exploitation (Safe_VC, Safe_N, Safe_HW) comprend un premier algorithme (Safe_VC) qui se présente comme un Code Vital.

3. Procédé selon la revendication 1 ou 2, dans lequel la troisième instruction d'exploitation (Safe_VC, Safe_N, Safe_HW) comprend le premier algorithme (Safe_N) sous une forme non modifiée.

4. Procédé selon la revendication 2 ou 3, dans lequel le premier algorithme (Safe_VC, Safe_N) est un algorithme de sécurité pour l'établissement d'un critère de déclenchement pour l'actionneur.

5. Procédé selon l'une quelconque des revendications 2 à 4, dans lequel la troisième instruction d'exploitation (Safe_VC, Safe_N, Safe_HW) et la première instruction d'exploitation (Main_Alg) se déroulent cycliquement et parallèlement l'une à l'autre sur le microcontrôleur (10).

6. Procédé selon l'une quelconque des revendications précédentes, dans lequel la troisième instruction d'exploitation (Safe_VC, Safe_N, Safe_HW) comprend un second algorithme (Safe_HW) qui teste des composants matériels du microcontrôleur (10) sur leur fonctionnalité conformes aux dispositions.

7. Procédé selon la revendication 6, dans lequel les composants matériels testés par le second algorithme sont une mémoire volatile et/ou une mémoire non volatile et/ou un convertisseur analogique-numérique et/ou un bus de données.

8. Procédé selon la revendication 6 ou 7, dans lequel l'exécution de second algorithme (Safe_HW) nécessite plusieurs cycles de la première instruction d'exploitation.

9. Procédé selon l'une quelconque des revendications 2 à 8, dans lequel un signal de sortie respectif (S7, S8, S9) généré par le premier algorithme modifié, le premier algorithme non modifié et le second algorithme est acheminé à une unité logique (15) du microcontrôleur (10), qui traite les signaux de sortie respectifs (S7, S8, S9) pour obtenir un signal de diagnostic (S10).

10. Procédé selon la revendication 9, dans lequel l'unité logique (15) s'appuie sur un troisième algorithme qui se présente sous la forme d'un Code Vital.

11. Procédé selon l'une quelconque des revendications précédentes, dans lequel, comme signal d'excitation (S3, S4), on utilise un signal généré artificiellement.

12. Procédé selon l'une quelconque des revendications, dans lequel le signal d'excitation (S3, S4) est généré par un générateur de signal (13) du microcontrôleur (10).

13. Procédé selon l'une quelconque des revendications 1 à 11, dans lequel le signal d'excitation (S3, S4) est généré par un générateur de signal (13) à l'extérieur du microcontrôleur (10).

14. Procédé selon l'une quelconque des revendications précédentes, dans lequel le signal de déclenchement (S5), le signal de confirmation (S6) et le signal de diagnostic (S10) sont acheminés à l'unité de combinaison de signaux par le biais de chemins de données séparés et indépendants l'un de l'autre.

15. Microcontrôleur pour un appareil de commande, en particulier un système de protection de personnes dans un véhicule automobile, comprenant :
- une première unité de traitement (21) pour traiter un premier signal de capteur (S1) fourni par un premier capteur (11) selon une première instruction d'exploitation (Main_Alg) et pour délivrer un signal de déclenchement (S5) correspondant à l'exploitation à une première sortie du microcontrôleur (10),
- une deuxième unité de traitement (22) pour traiter un deuxième signal de capteur (S2) fourni par un deuxième capteur (11) selon une deuxième instruction d'exploitation (Plaus_Alg) et pour délivrer un signal de confirmation (S6) correspondant à l'exploitation à une deuxième sortie du microcontrôleur (10),
- une troisième unité de traitement (23) pour traiter un signal d'excitation (S3, S4) différent des premier et deuxième signaux de capteur (S1, S2) selon une troisième instruction d'exploitation (Safe_VC, Safe_N, Safe_HW) etpourdélivrerunsignal de diagnostic (S10) correspondant à l'exploitation à une troisième sortie du microcontrôleur (10).

16. Microcontrôleur selon la revendication 15, qui présente un générateur de signal pour générer le signal d'excitation (S3, S4) .

17. Microcontrôleur selon la revendication 15 ou 16, dans lequel la troisième unité de traitement (23) comprend un premier algorithme (Safe_VC) qui se présente sous la forme d'un Code Vital.

18. Microcontrôleur selon l'une quelconque des revendications 15 à 17, dans lequel la troisième instruction d'exploitation (Safe_VC, Safe_N, Safe_HW) comprend le premier algorithme (Safe_N) sous une forme non modifiée.

19. Microcontrôleur selon la revendication 17 ou 18, dans lequel le premier algorithme (Safe_VC, Safe_N) est un algorithme de sécurité pour l'établissement d'un critère de déclenchement pour un actionneur.

20. Microcontrôleur selon l'une quelconque des revendications 15 à 19, dans lequel la troisième instruction d'exploitation (Safe_VC, Safe_N, Safe_HW) comprend un second algorithme (Safe_HW) qui teste des composants matériels du microcontrôleur (10), en particulier une mémoire volatile et/ou une mémoire non volatile et/ou un convertisseur analogique-numérique et/ou un bus de données, sur leur fonctionnalité conforme aux dispositions.

21. Microcontrôleur selon l'une quelconque des revendications 17 à 20, dans lequel celui-ci présente une unité logique (15), à laquelle peut être acheminé un signal de sortie respectif (S7, S8, S9) généré par le premier algorithme modifié, le premier algorithme non modifié et le second algorithme et qui est conçue pour traiter les signaux de sortie respectifs (S7, S8, S9) pour donner le signal de diagnostic (S10).

22. Microcontrôleur selon la revendication 21, dans lequel l'unité logique (15) s'appuie sur un troisième algorithme qui se présente sous la forme d'un Code Vital.

23. Appareil de commande, en particulier pour un système de protection de personnes dans un véhicule automobile, comprenant :
- un microcontrôleur (10) selon l'une quelconque des revendications 15 à 22,
- une unité de combinaison de signaux (14) séparée du microcontrôleur (10), à laquelle peuvent être acheminés, par le microcontrôleur (10), le signal de déclenchement (S5), le signal de confirmation (S6) et le signal de diagnostic (S10), l'unité de combinaison de signaux (14) étant conçue pour transmettre un signal de commande (S11) à l'actionneur, lorsque
- le premier signal de capteur (S1) correspond à un ou plusieurs premiers critères prédéterminés,
- le deuxième signal de capteur (S2) correspond à un ou plusieurs seconds critères prédéterminés, et
- le signal d'excitation exploité (S3, S4) correspond à un résultat escompté.
